# EUROPÄISCHE PATENTSCHRIFT

(11) **EP 3 364 493 B1**
(45) Veröffentlichungstag und Bekanntmachung des Hinweises auf die Patenterteilung: **01.04.2020**
(21) Anmeldenummer: 18157007.8
(22) Anmeldetag: 15.02.2018
(51) Int. Cl.: H01M 10/48, H01M 10/44, H01M 10/42, H01M 2/10

(54) **AKKUPACK MIT TEMPERATURSENSOR**
BATTERY PACK WITH TEMPERATURE SENSOR
BLOC BATTERIE AVEC UN DÉTECTEUR DE TEMPÉRATURE

(30) Priorität: 16.02.2017 DE 102017103194
(43) Veröffentlichungstag der Anmeldung: 22.08.2018
(73) Patentinhaber: Metabowerke GmbH, 72622 Nürtingen (DE)
(72) Erfinder: Gräber, Jochen, 73266 Bissingen (DE); Frantz, Roland, 72639 Neuffen (DE); Vogel, Leopold, 72622 Nürtingen (DE); Wolf, Alexander, 73240 Wendlingen (DE)
(74) Vertreter: Markfort, Iris-Anne Lucie

(56) Entgegenhaltungen:
- US-A1- 2009 117 452
- US-A1- 2013 196 180
- US-A1- 2015 244 040
- US-A1- 2016 204 481

## Beschreibung

Die Erfindung betrifft einen Akkupack sowie ein Elektrohandwerkzeuggerät, in dem ein erfindungsgemäßer Akkupack eingesetzt werden kann.

Als Akkupacks werden insbesondere wiederaufladbare Akkumulatoren für elektrisch betriebene Geräte bezeichnet. Zu derartigen elektrisch betriebenen Geräten gehören beispielsweise Elektrohandwerkzeuggeräte, jedoch auch alle erdenklichen anderen Arten von elektrisch angetriebenen Geräten, wie beispielsweise Küchengeräte, mobile Arbeitsgeräte (Handy, Tablet, Laptop etc.) oder auch mobile Unterhaltungsgeräte.

Gerade beim Einsatz von elektrisch betriebenen Geräten, insbesondere von Elektrohandwerkzeuggeräten, im Baustellenbereich ist die Verwendung von Akkupacks vorteilhaft, da keine Kabel und insbesondere keine Verlängerungskabel verwendet werden müssen, um das betreffende Gerät mit elektrischem Strom zu versorgen. Weiterhin kann auch die Bereitstellung von elektrischem Strom auf Baustellen insbesondere bei einem gleichzeitigen Betrieb einer Vielzahl von elektrisch betriebenen Geräten, insbesondere von Elektrohandwerkzeuggeräten, problematisch sein. Schließlich entfällt bei akkubetriebenen Elektrohandwerkzeugen die Gefahr einer Beschädigung des eigenen Stromkabels bei der Arbeit.

Üblicherweise umfasst ein Akkupack für ein elektrisches Gerät wenigstens eine Leiterplatte, wenigstens eine Akkuzelle sowie einen Temperatursensor. In der Regel sind mehrere Akkuzellen zu Akkupacks zusammengefasst, die sich einfach an das Gerät anstecken lassen. Die Leiterplatte kann zur Aufnahme von Widerständen, von Sicherungen und von elektrischen Komponenten zur Steuerung der Akkuzellen ausgebildet und mit diesen bestückt sein. Die Akkuzellen sind über Leiterbahnen oder Leiterbleche mit der Leiterplatte verbunden und können in Reihe und/oder parallel geschaltet sein.

Akkupacks dieser Art sind beispielsweise mit einem Elektrohandwerkzeuggerät koppelbar, um im angekoppelten Zustand den Elektromotor des Elektrohandwerkzeuggeräts mit Strom zu versorgen. Nach Entladung eines angekoppelten Akkupacks kann dieser dann gegen einen geladenen Akkupack ausgetauscht werden oder es kann unmittelbar am Gerät ein Ladevorgang vorgenommen werden.

Dabei ist es bekannt, dass sowohl Fähigkeit eines Akkus wieder aufgeladen zu werden als auch seine Fähigkeit Strom abzugeben von seiner Temperatur abhängen. Sofern ein Akkupack beispielsweise eine zu niedrige Temperatur besitzt, kann er nur noch wenig oder gar keinen Strom mehr an die Elektrohandwerkzeugmaschine abgeben. Besitzt er beispielsweise eine zu hohe Temperatur, sinkt die in ihm speicherbare Stromkapazität ab. Darüber hinaus kann sich durch eine zu hohe Temperatur im Inneren des Akkupacks ein gefährlicher Zustand einstellen.

Aus diesem Grund ist es erstrebenswert, die Temperatur eines Akkupacks bestimmen zu können. Das Vorsehen eines Temperaturfühlers in einem Akkupack ist aus unterschiedlichen Dokumenten zum Stand der Technik bekannt.

So offenbart beispielsweise die DE 42 34 231 A1 einen wiederaufladbaren Akku, bei dem ein Temperaturfühler vorgesehen ist, der bei Erreichen einer vorbestimmten Temperatur den Akku abschaltet. Der Akku liefert dann keinen Strom mehr, obwohl er noch nicht vollständig entladen ist. Da eine Akkukühlzeit entfällt, lässt er sich aber sofort wieder aufladen. Trotz der kürzeren Entladedauer soll der Akku über einen größeren Zeitraum zur Verfügung stehen. Mittels des Temperaturfühlers soll die Temperatur der Akkuzellen bestimmt werden.

Eine weitere Lösung ist aus der DE 90 16 987 U1 bekannt, bei der ein metallischer Klemmbügel einen Temperatursensor gegen einen Akkumulator drückt. Dabei ist der metallische Klemmbügel mit einem seiner Enden mittels einer Spannschraube und einer Spannmutter an einer Spannpratze befestigt. Diese ist wiederum an einer metallischen Bodenplatte festgelegt.

Des Weiteren ist es bekannt, Temperaturfühler irgendwo im Akkupack so anzuordnen, dass möglichst eine Berührung mindestens einer Zellenwand stattfindet. Da Temperaturfühler in herkömmlicher Weise lose in den Akkupack eingefügt werden, verbleibt immer eine kleine Luftstrecke bzw. ein Spalt zwischen der Oberfläche des Temperaturfühler und der nächstliegenden Zelle. Auf diese Weise werden jedoch die gemessenen Temperaturen durch das zwischenliegende Luftpolster verfälscht.

Um diesem Problem zu begegnen ist in der Druckschrift EP 1 927 152 B1 eine Lösung beschrieben, bei der ein Federelement vorgesehen ist, welches den Temperaturfühler in Richtung auf mindestens eine Akkuzelle belastet, wobei das Federelement mit einem Zellenhalter zur Aufnahme und Halterung der Akkuzellen verbunden ist und wobei Zellenhalter und Federelement, letzteres als Lasche ausgebildet, Kunststoffteile sind.

Alternativ beschreibt die US 2016 0204481 A1 eine Lösung, bei der ein Temperatursensor mittels eines separaten Befestigungselements zwischen den Batteriezellen und der Leiterplatte angebracht wird. Dabei wird das Befestigungselement mittels Rasthaken über korrespondierende Löcher an der Leiterplatte befestigt.
Die US 2013/0196180 A1 beschreibt eine weitere alternative Lösung, bei der der Temperatursensor flexibel ausgebildet und an einer Batteriezelle in der Art eines Gürtels lösbar befestigbar ist.

Wenngleich diese Lösungen sich in der Praxis durchaus als vorteilhaft gezeigt hat, ist jedoch die Montage, wie auch bei den weiteren vorstehend beschriebenen Lösungen, vergleichsweise aufwendig. So ist es insbesondere notwendig, den Temperaturfühler zu dem mit der Leiterplatte zu verbinden. Dies geschieht bei den aus dem Stand der Technik bekannten Lösungen beispielsweise durch Bereitstellen einer Verbindung über eine Litze, einen Draht, ein Befestigungselement oder einen Stecker. In allen diesen Fällen muss die Leiterplatte jedoch mit den jeweiligen Verbindungselementen händisch bestückt werden, so dass dieser Teil der Montage von Hand vorzunehmen ist.

In der US 2015/0244040 A1 ist ferner eine Heizanordnung für eine oder mehrere Batterien beschrieben, bei der ein separates Heizelement mit der Leiterplatteverbunden ist.

Dementsprechend besteht eine Aufgabe der vorliegenden Erfindung darin, einen Ackupack bereit zu stellen, der die aus dem Stand der Technik bekannt gewordenen Nachteile zumindest verringert und eine vereinfachte Montage ermöglicht.

Diese Aufgabe wird durch einen Akkupack mit den Merkmalen des Anspruchs 1 sowie ein Elektrohandwerkzeuggerät mit den Merkmalen des Anspruchs 7 gelöst.

Demgemäß wird der wenigstens eine Temperatursensor an wenigstens einer Leiterplatte angeordnet und ist unmittelbar auf der Leiterplatte aufgebracht, wobei ein Abschnitt der Leiterplatte ein Trägerelement bildet, auf das der Temperatursensor aufgebracht ist.

Dabei bildet die wenigstens eine Leiterplatte, auf der der Temperatursensor unmittelbar aufgebracht ist, insbesondere die Hauptleiterplatte, die mit vorgesehenen Widerständen, Sicherungen und/oder elektrischen Komponenten zur Steuerung der Ackuzellen bestückt ist. Im Falle mehrerer vorgesehener Leiterplatten kann so die Information des Temperatursensors einfach und direkt an die verarbeitende Elektronik der Hauptleiterplatte weitergegeben werden.

Durch die direkte Bestückung der Leiterplatte mit dem Temperatursensor kann zudem auf die aufwendige Montage eines Verbindungselements, beispielsweise einer Litze, eines Verbindungsdrahts oder dergleichen, wie sie aus dem Stand der Technik bekannt ist, verzichtet werden.

Erfindungsgemäß ist das Trägerelement einteilig mit der Leiterplatte ausgebildet, d. h. das Trägerelement ist Teil der Leiterplatte. Auf ein gesondertes Trägerelement wird erfindungsgemäß verzichtet.

So kann eine übliche Leiterplatte dadurch mit einem Trägerelement versehen werden, dass ein Abschnitt der Leiterplatte durch einen Umformprozess oder elastisch umgeformt, beispielsweise umgebogen wird, so dass sich das Trägerelement zumindest im montierten Zustand des Akkupacks in einer Ebene erstreckt, die nicht parallel zu dem Rest der Leiterplatte verläuft. So kann die Leiterplatte im Bereich des Trägerelements beispielsweise umgebogen oder ausgebeult werden.

Erfindungsgemäß ist weiter vorgesehen, dass der Akkupack einen Zellenhalter und/oder ein Gehäuse umfasst, wobei an dem Zellenhalter oder dem Gehäuse eine Haltestruktur vorgesehen ist, die in montiertem Zustand den an der Leiterplatte angebrachten Temperatursensor in Kontakt mit wenigstens einer Akkuzelle hält. So kann beispielsweise bei einer elastischen Ausgestaltung der Leiterplatte zumindest im Bereich des Trägerelements eine entsprechende Auslenkung des Trägerelements in Richtung wenigstens einer Akkuzelle durch die Haltestruktur bewirkt werden.

Alternativ ist es jedoch selbstverständlich ebenfalls denkbar, dass die Leiterplatte im Bereich des Trägerelements bereits entsprechend umgeformt ist und die Haltestruktur nur dazu dient, den Kontakt des an der Leiterplatte angebrachten Temperatursensors mit wenigstens einer Akkuzelle sicherzustellen.

Alternativ oder zusätzlich kann vorgesehen sein, dass das Trägerelement abschnittsweise durch eine nutförmige Ausnehmung von der restlichen Leiterplatte abgegrenzt ist. Bei der Herstellung des Trägerelements kann beispielsweise eine nutförmige Einfräsung vorgenommen werden, welche das Trägerelement zumindest abschnittsweise von der restlichen Leiterplatte trennt. Die nutförmige Ausnehmung kann in einer Draufsicht unterschiedlichste Kurven beschreiben. So kann beispielsweise vorgesehen sein, dass das Trägerelement in einer Draufsicht auf die Leiterplatte laschenförmig ausgebildet ist.

Unabhängig davon, ob das Trägerelement abschnittsweise durch eine nutförmige Ausnehmung von der restlichen Leiterplatte abgegrenzt ist und/oder sich beispielsweise durch Umbiegen in einer anderen Ebene erstreckt, als die übrige Leiterplatte kann zudem vorgesehen sein, dass die Leiterplatte zumindest im Bereich des Trägerelements elastisch ausgebildet ist, um den Temperatursensor in Richtung wenigstens einer Akkuzelle elastisch vorspannen zu können.

So kann beispielsweise ein laschenförmiges - jedoch auch jedes anderweitig geformte oder vorgesehene - Trägerelement um einen vorgegebenen Winkel relativ zu der restlichen Leiterplatte ausgelenkt werden, wobei der Winkel derart gewählt ist, dass im montierten Zustand das Trägerelement in den Bauraum wenigstens einer Ackuzelle eingreifen würde. Durch die bereichsweise elastische Ausbildung des Trägerelements kann dieses jedoch bei der Montage von der entsprechenden wenigstens einen Akkuzelle elastisch ausgelenkt werden und spannt auf diese Weise den Temperatursensor gegen die wenigstens eine Akkuzelle elastisch vor. Eine solche Lösung vereint beispielsweise die Vorteile eines Federelements, wie es beispielsweise aus der EP 1 927 152 B1 bekannt ist, mit dem erfindungsgemäßen Vorteil, auf ein zusätzliches Verbindungselement, wie eine Litze, einen Stecker oder einen Verbindungsdraht verzichten zu können.

Der wenigstens eine Temperatursensor kann unabhängig von der konkreten Gestaltung des Trägerelements auf einer der wenigstens einen Akkuzelle zugewandten Seite oder alternativ auf einer einer hiervon abgewandten Seite der Leiterplatte angeordnet sein.

Insbesondere kann vorgesehen sein, dass die Haltestruktur einen Schnapphaken umfasst, der im montierten Zustand das Trägerelement hintergreift und in der gewünschten Position hält.

Alternativ oder zusätzlich kann vorgesehen sein, dass die Haltestruktur einen Niederhalter umfasst, der im montierten Zustand das Trägerelement in Richtung zu wenigstens einer Akkuzelle drückt und in der gewünschten Position hält. Ein solcher Niederhalter kann insbesondere als Vorsprung, beispielsweise domförmig, ausgebildet sein und sich beispielsweise von einer Gehäuseschale, die an der von den Ackuzellen abgewandten Seite der Leiterplatte angebracht wird, in Richtung zu den Ackuzellen erstrecken. Eine als Schnapphaken ausgebildete Haltestruktur kann beispielsweise an dem Zellenträger ausgebildet sein, um bei einer Montage das Trägerelement zu hintergreifen und im montierten Zustand in der gewünschten Position zu fixieren.

Schließlich betrifft die Erfindung ein Elektrohandwerkzeuggerät mit einem Akkupack, wie er vorstehend beschrieben ist, zum Versorgen eines Elektromotors des Elektrohandwerkzeuggeräts mit elektrischer Energie, wobei der Akkupack mit dem Elektrohandwerkzeuggerät lösbar koppelbar ist.

Weitere Vorteile und Merkmale der Erfindung ergeben sich aus den übrigen Anmeldungsunterlagen, insbesondere aus der Figurenbeschreibung und den Unteransprüchen.

Die Erfindung wird nachfolgend unter Bezugnahme auf die Figuren näher erläutert. Dabei zeigen die Figuren bevorzugte Ausführungsformen der Erfindung, bei der unterschiedliche Merkmale der Erfindung miteinander kombiniert sind.

Die Figuren zeigen schematisch:
- Figur 1: einen Akkupack gemäß einer ersten Ausführungsform in einer perspektivischen Darstellung;
- Figur 2: den Akkupack gemäß Figur 1 in teilgeschnittener Seitendarstellung;
- Figur 3: eine Draufsicht auf einen erfindungsgemäßen Akkupack mit Deckel;
- Figur 4: den Akkupack gemäß Figur 3 in einer Schnittdarstellung entlang der Linie B-B; und
- Figur 5: das Detail C aus Figur 4; und
- Figur 6: eine isometrische Ansicht eines erfindungsgemäßen Akkupacks gemäß einer weiteren Ausführungsform der Erfindung.

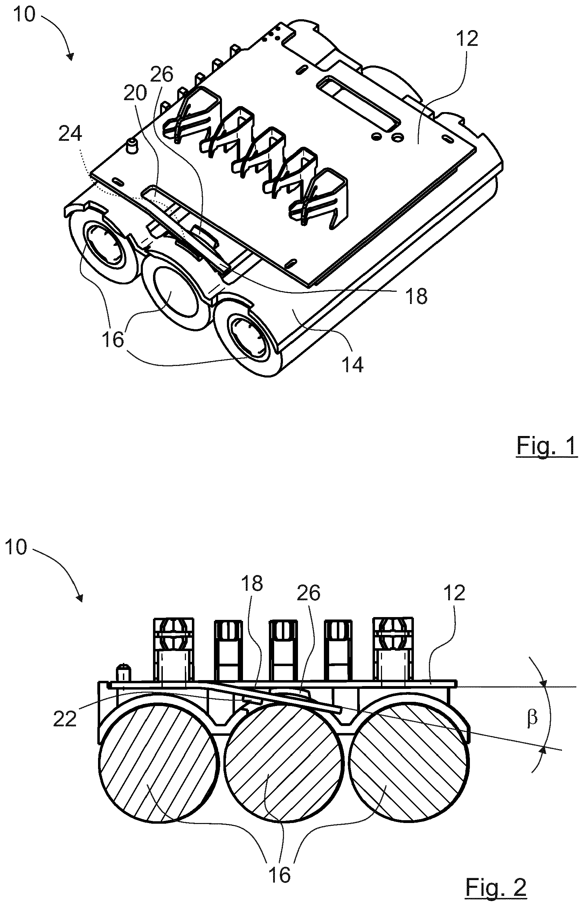

Die Figur 1 zeigt einen Akkupack, der allgemein mit dem Bezugszeichen 10 versehen ist. In dieser Darstellung zur Vereinfachung nicht gezeigt ist das äußere Akkugehäuse, das den Akkupack 10 umgibt. Der Akkupack 10 umfasst hierbei eine Leiterplatte 12, einen Zellenhalter 14 sowie drei Akkuzellen 16.

Selbstverständlich kann ein Akkupack im Sinne der vorliegenden Erfindung auch mehr als drei Akkuzellen beispielsweise acht Akkuzellen, vier Akkuzellen oder weniger Akkuzellen, beispielsweise eine oder zwei Akkuzellen aufweisen. Weiterhin ist es denkbar, dass mehr als eine Leiterplatte vorgesehen ist, wobei im Sinne einer besonders einfachen Montage eine einzige Leiterplatte von Vorteil ist. Zudem ist die dargestellte Ausgestaltung eines Zellenhalters 14 nur beispielhaft, andere Bauformen, wie sie beispielsweise aus der EP 1 927 152 B1 bekannt sind, sind ebenfalls denkbar. Für die Erfindung spielt ebenfalls keine Rolle, ob die Akkuzellen parallel oder in Reihe geschaltet sind und insbesondere auch nicht, ob die Akkuzellen in einer Ebene oder in mehreren Ebenen übereinander angeordnet sind.

Die Akkuzellen 16 sind im Zellenhalter 14 so aufgenommen, dass Kurzschlüsse, aber auch mechanische Beschädigungen der elektrischen Kontaktierungen und auch der Akkuzellen 16 selbst vermieden werden. Darüber hinaus weist der Zellenhalter 14 Verbindungselemente (nicht bezeichnet), die zur Verbindung mit Gehäuseteilen des Gehäuses 30 des Akkupacks 10 dienen.

Die Leiterplatte 12 umfasst ein einteilig mit ihr ausgebildetes Trägerelement 18, das durch einen Abschnitt der Leiterplatte gebildet ist. Das Trägerelement 18 ist in der ersten Ausführungsform durch eine gerade Einfräsung 20 von dem übrigen Teil der Leiterplatte 12 abgegrenzt und in der Form einer Lasche oder Zunge ausgebildet. Weiterhin erkennt man in der Figur 2 deutlich, dass das Trägerelement 18 sich in einer anderen Ebene erstreckt, als die restliche Leiterplatte 12. Das Trägerelement 18 und die Leiterplatte 12 schließen zwischen sich einen Winkel ß von etwa 20° ein. Dieser kann bei der Herstellung beispielsweise durch einen Umformprozess wie Biegen der Leiterplatte im Bereich des Trägerelements 18 erreicht werden. Durch diese Auslenkung des Trägerelements 18 um den Winkel ß kann das Trägerelement an Anlage an oder in unmittelbare Nähe zu einer der Akkuzellen 16 des Akkupacks 10 gebracht werden. Selbstverständlich kann je nach Bauform des Akkupacks auch ein größerer oder kleinerer Biegewinkel ß gewählt werden. Weiterhin ist es auch denkbar, dass nicht das gesamte Trägerelement sich in einer Ebene schräg zur restlichen Leiterplatte erstreckt, sondern das Trägerelement beispielsweise bereichsweise ausgebeult oder anderweitig umgeformt ist, um einen Vorsprung für einen aufzunehmenden Temperatursensor zu bilden.

Das Trägerelement 18 ist in den Ausführungsformen der Figuren 1 bis 6 auf seiner den Akkuzellen 16 zugewandten Seite mit einem Temperatursensor 22 (dargestellt in Figuren 2, 4 und 5) bestückt, welcher erfindungsgemäß in unmittelbarer Anlage an wenigstens eine der Akkuzellen 16 oder, wie in den Figuren 2, 4 und 5 dargestellt, nicht erfindungsgemäß in unmittelbarer Nähe zu wenigstens einer Akkuzelle 16 gebracht werden kann.

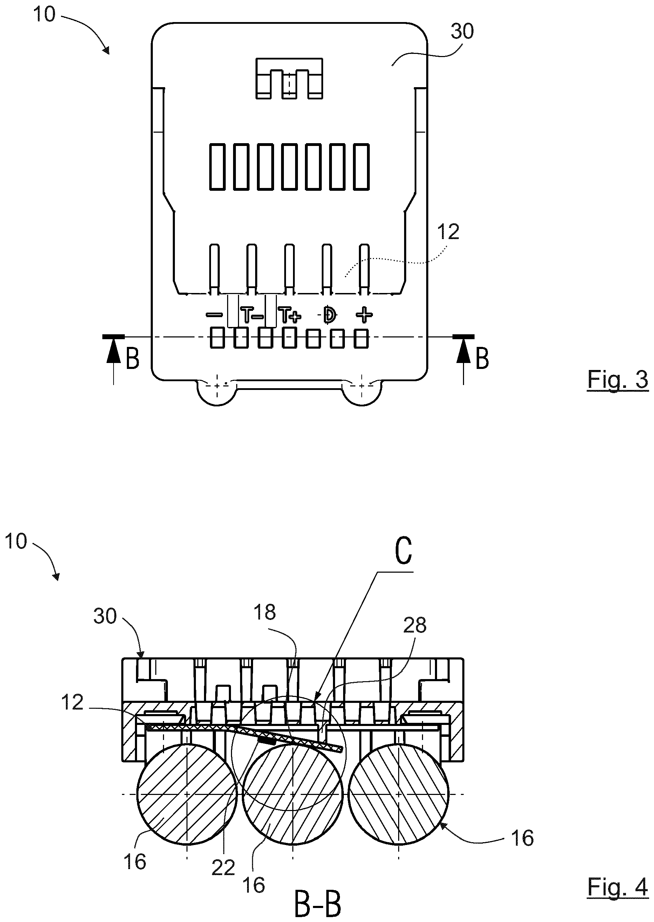

Gemäß der ersten Ausführungsform der Figuren 1 und 2 ist an dem Zellenträger 14 eine Aussparung 24 mit Einführschrägen 26 vorgesehen, die eine Kontaktierung oder eine unmittelbare Nähe zu der mittleren Akkuzelle ermöglicht. Bei einer alternativen Ausgestaltung des Zellenhalters 14 kann auf eine solche Aussparung 24 verzichtet werden. So kann beispielsweise eine Ausgestaltungsvariante des Zellenhalters, wie in der EP 1 927 152 B1 beschrieben, vorgesehen sein, die sich beispielsweise besonders gut mit der Lösung gemäß der Figuren 3 bis 5 kombinieren lässt.

Im Unterschied zu der Darstellung der Figuren 1 und 2 ist in den Figuren 3 bis 5 ein Niederhalter 28 an der Gehäuseschale 30 vorgesehen, der das Trägerelement 18 in Richtung zu der wenigstens einen Akkuzelle 16 drückt. Wie in der Figur 4 zu erkennen ist, ragt der Niederhalter 28 von einer Gehäuseschale 30 in Richtung zu den Ackuzellen 16 vor, die auf einer von den Akkuzellen 16 abgewandten Seite der Leiterplatte 12 angeordnet ist (obere Gehäuseschale). Der Niederhalter kann zur Auslenkung oder Sicherung eines bereits ausgelenkten Trägerelements dienen. Demgemäß kann der Niederhalter als einzige Haltestruktur ausgebildet sein oder als Teil einer Haltestruktur, die beispielsweise weitere Elemente, wie in den Figuren 1, 2 und 6 gezeigt, umfasst.

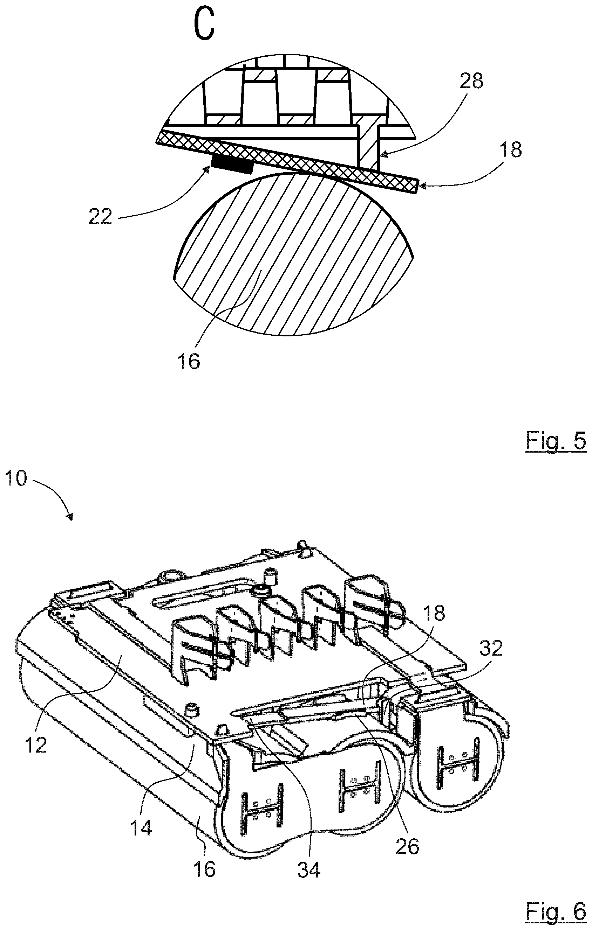

Die Figur 6 zeigt schließlich eine weitere Ausführungsform, bei der ein zusätzlicher Schnapphaken 32 an dem Zellenträger 14 vorgesehen ist, der das Trägerelement 18 im montierten Zustand übergreift. Der Zellenhalter 14 ist bei dieser Ausführungsform wie der Zellenhalter der Figuren 1 und 2 ausgebildet und weist ebenfalls Einführschrägen 26 und eine Ausnehmung 24 auf. Zusätzlich wird eine erhöhte Elastizität des Trägerelements im Übergangsbereich zu der Leiterplatte 12 dadurch bereitgestellt, dass das Trägerelement 18 im Übergangsbereich mit einer zusätzlichen Einfräsung 34 versehen ist, welche eine verringerte Materialstärke der Leiterplatte in diesem Bereich und damit eine höhere Elastizität zur Folge hat.

Je nach Ausgangsdicke der Leiterplatte 12 kann jedoch auf eine solche Einfräsung 34 verzichtet werden. So ist es beispielsweise denkbar, eine Leiterplatte mit einer Gesamtstärke von etwa 1 mm zu verwenden, die gemäß Praxiserprobungen eine ausreichende Elastizität aufweist, um den Trägerabschnitt bzw. das Trägerelement 18 in die gewünschte Position zu verbringen.

Allen dargestellten Akkupacks ist gemein, dass der Temperatursensor 22 unmittelbar an der Leiterplatte 12 angebracht ist, so dass auf für die Montage aufwendige Verbindungselemente, wie zusätzliche Litzen, Verbindungsdrähte oder dergleichen verzichtet werden kann.

## Patentansprüche

1. Akkupack (10) für ein elektrisches Gerät mit wenigstens einer Leiterplatte (12), wenigstens einer Akkuzelle (16) sowie wenigstens einem Temperatursensor (22) zur Messung der Temperatur von wenigstens einer Akkuzelle (16),
**dadurch gekennzeichnet, dass** die Leiterplatte (12) mit dem Temperatursensor (22) bestückt ist, so dass der Temperatursensor (22) unmittelbar auf der Leiterplatte (12) aufgebracht ist,
wobei ein Abschnitt der Leiterplatte (12) ein Trägerelement (18) bildet, das einteilig mit der Leiterplatte (12) ausgebildet ist und auf dem der Temperatursensor (22) aufgebracht ist,
und wobei sich das Trägerelement (18) zumindest im montierten Zustand des Akkupacks (10) in einer anderen Ebene erstreckt als die übrige Leiterplatte, **dadurch gekennzeichnet, dass** der Akkupack ferner einen Zellenhalter (14) und/oder ein Gehäuse (30) umfasst, wobei an dem Zellenhalter (14) oder dem Gehäuse (30) eine Haltestruktur vorgesehen ist, die in montiertem Zustand des Akkupacks den an der Leiterplatte (12) angebrachten Temperatursensor (18) in Kontakt mit wenigstens einer Akkuzelle (16) hält, derart, dass der Temperatursensor (18) die Temperatur der benachbarten Akkuzelle (16) zu messen vermag.

2. Akkupack nach Anspruch 1,
**dadurch gekennzeichnet, dass** ein Abschnitt der Leiterplatte durch einen Umformprozess oder elastisch umgeformt, beispielsweise umgebogen wird, so dass sich das Trägerelement zumindest im montierten Zustand des Akkupacks in einer Ebene erstreckt, die nicht parallel zu dem Rest der Leiterplatte verläuft.

3. Akkupack nach einem der vorhergehenden Ansprüche,
**dadurch gekennzeichnet, dass** das Trägerelement abschnittsweise durch eine nutförmige Ausnehmung von der restlichen Leiterplatte abgegrenzt ist.

4. Akkupack nach einem der vorhergehenden Ansprüche,
**dadurch gekennzeichnet, dass** der wenigstens eine Temperatursensor (22) auf einer der wenigstens einen Akkuzelle (16) zugewandten Seite der Leiterplatte (12) oder auf einer von dieser abgewandten Seite der Leiterplatte (12) angeordnet ist.

5. Akkupack (10) nach einem der vorhergehenden Ansprüche,
**dadurch gekennzeichnet, dass** die Haltestruktur einen Schnapphaken (32) umfasst, der im montierten Zustand des Akkupacks das Trägerelement (18) abschnittsweise hintergreift und in der gewünschten Position hält.

6. Akkupack (10) nach einem der vorhergehenden Ansprüche,
**dadurch gekennzeichnet, dass** die Haltestruktur einen Niederhalter (28) umfasst, der im montierten Zustand des Akkupacks das Trägerelement (18) in Richtung zu wenigstens einer Akkuzelle (16) drückt und in der gewünschten Position hält.

7. Elektrohandwerkzeuggerät mit einem Akkupack (10) nach einem der vorhergehenden Ansprüche, zum Versorgen eines Elektromotors mit elektrischer Energie, wobei der Akkupack (10) mit dem Elektrohandwerkzeuggerät lösbar verbindbar ist, insbesondere koppelbar ist.

## Claims

1. Rechargeable battery pack (10) for an electrical device having at least one printed circuit board (12), at least one rechargeable battery cell (16) and at least one temperature sensor (22) for measuring the temperature of at least one rechargeable battery cell (16),
**characterized in that** the printed circuit board (12) is populated with the temperature sensor (22) such that the temperature sensor (22) is applied directly to the printed circuit board (12),
wherein a section of the printed circuit board (12) forms a carrier element (18), which is formed in one piece with the printed circuit board (12) and to which the temperature sensor (22) is applied,
and wherein the carrier element (18) at least in the mounted state of the rechargeable battery pack (10) extends in a different plane to the rest of the printed circuit board,
**characterized in that** the rechargeable battery pack also comprises a cell holder (14) and/or a housing (30), wherein a holding structure is provided on the cell holder (14) or the housing (30), said holding structure in the mounted state of the rechargeable battery pack holding the temperature sensor (18) that is fixed to the printed circuit board (12) in contact with at least one rechargeable battery cell (16) in such a way that the temperature sensor (18) is able to measure the temperature of the adjacent rechargeable battery cell (16).

2. Rechargeable battery pack according to Claim 1,
**characterized in that** a section of the printed circuit board is reshaped by a reshaping process or elastically, for example is bent over, so that the carrier element at least in the mounted state of the rechargeable battery pack extends in a plane that does not run parallel to the rest of the printed circuit board.

3. Rechargeable battery pack according to either of the preceding claims,
**characterized in that** the carrier element is delimited in sections from the rest of the printed circuit board by way of a groove-shaped recess.

4. Rechargeable battery pack according to one of the preceding claims,
**characterized in that** the at least one temperature sensor (22) is arranged on a side of the printed circuit board (12) that faces the at least one rechargeable battery cell (16) or on a side of the printed circuit board (12) that faces away therefrom.

5. Rechargeable battery pack (10) according to one of the preceding claims,
**characterized in that** the holding structure comprises a snap-action hook (32), which in the mounted state of the rechargeable battery pack engages behind the carrier element (18) in sections and holds same in the desired position.

6. Rechargeable battery pack (10) according to one of the preceding claims,
**characterized in that** the holding structure comprises a hold-down clamp (28), which in the mounted state of the rechargeable battery pack presses the carrier element (18) in the direction of at least one rechargeable battery cell (16) and holds same in the desired position.

7. Electric hand-held machine tool having a rechargeable battery pack (10) according to one of the preceding claims, for supplying electrical energy to an electric motor, wherein the rechargeable battery pack (10) can be connected, in particular can be coupled, in a releasable manner to the electric hand-held machine tool.

## Revendications

1. Bloc batterie (10) pour un appareil électrique avec au moins un circuit imprimé (12), au moins une cellule de batterie (16) ainsi qu'au moins un détecteur de température (22) pour la mesure de la température d'au moins une cellule de batterie (16), **caractérisé en ce que** le circuit imprimé (12) est muni du détecteur de température (22), de telle manière que le détecteur de température (22) soit placé directement sur le circuit imprimé (12),
dans lequel une partie du circuit imprimé (12) forme un élément de support (18), qui est réalisé d'une seule pièce avec le circuit imprimé (12) et sur lequel le détecteur de température (22) est placé,
et dans lequel l'élément de support (18) s'étend au moins dans l'état monté du bloc batterie (10) dans un autre plan que le reste du circuit imprimé,
**caractérisé en ce que** le bloc batterie comprend en outre un porte-cellules (14) et/ou un boîtier (30), dans lequel il est prévu sur le porte-cellules (14) ou le boîtier (30) une structure de support qui, dans l'état monté du bloc batterie, maintient le détecteur de température (18) placé sur le circuit imprimé (12) en contact avec au moins une cellule de batterie (16), de telle manière que le détecteur de température (18) puisse mesurer la température de la cellule de batterie voisine (16).

2. Bloc batterie selon la revendication 1, **caractérisé en ce qu'**une partie du circuit imprimé est déformée par une opération de déformation ou de manière élastique, par exemple pliée, de telle manière que l'élément de support s'étende, au moins dans l'état monté du bloc batterie, dans un plan qui n'est pas parallèle au reste du circuit imprimé.

3. Bloc batterie selon l'une quelconque des revendications précédentes, **caractérisé en ce que** l'élément de support est délimité localement par rapport au reste du circuit imprimé par un évidement en forme de rainure.

4. Bloc batterie selon l'une quelconque des revendications précédentes, **caractérisé en ce que** ledit au moins un détecteur de température (22) est disposé sur un côté du circuit imprimé (12) tourné vers ladite au moins une cellule de batterie (16) ou sur un côté du circuit imprimé (12) détourné de celle-ci.

5. Bloc batterie (10) selon l'une quelconque des revendications précédentes, **caractérisé en ce que** la structure de support comprend un crochet à clip (32) qui, dans l'état monté du bloc de batterie, s'accroche localement derrière l'élément de support (18) et le maintient dans la position désirée.

6. Bloc batterie (10) selon l'une quelconque des revendications précédentes, **caractérisé en ce que** la structure de maintien comprend un appui inférieur (28) qui, dans l'état monté du bloc batterie, pousse l'élément de support (18) en direction d'au moins une cellule de batterie (16) et le maintient dans la position désirée.

7. Outil à main électrique avec un bloc batterie (10) selon l'une quelconque des revendications précédentes, pour l'alimentation d'un moteur électrique en énergie électrique, dans lequel le bloc batterie (10) peut être relié de façon séparable, en particulier peut être couplé, à l'outil à main électrique.
